# EUROPEAN PATENT SPECIFICATION

(11) **EP 2 907 078 B1**
(45) Date of publication and mention of the grant of the patent: **12.06.2019**
(21) Application number: 13815573.4
(22) Date of filing: 11.10.2013
(51) Int. Cl.: G06K 7/10

(54) **UHF RFID READER WITH IMPROVED ANTENNA SYSTEM**
UHF-RFID-LESER MIT VERBESSERTEM ANTENNENSYSTEM
LECTEUR RFID UHF AVEC SYSTÈME D'ANTENNES AMÉLIORÉ

(30) Priority: 11.10.2012 US 201261712521 P
(43) Date of publication of application: 19.08.2015
(73) Proprietor: Tagsys, 13600 La Ciotat (FR)
(72) Inventor: POUSSOT, Benoit, F-21110 Tart-le-Bas (FR); LAHEURTE, Jean-Marc, F-94350 Villiers Sur Marne (FR); LOUSSERT, Christophe, F-13090 Aix En Provence (FR)
(74) Representative: Novagraaf Technologies
(86) International application number: PCT/IB2013/059299
(87) International publication number: WO 2014/057464

(56) References cited:
- US-A1- 2007 182 566
- US-A1- 2008 122 629
- US-A1- 2009 002 248

## Description

### Technical field

The present invention relates to RFID readers able to read RFID tags and more particularly to a RFID reader with improved antenna system.

### Background of the invention

When UHF RFID technologies are used for logistics tracking/inventory control, it is usual to deal with a high density of tags, for instance to identify small items on pallets or shelves. One of the major problems facing RFID systems today is to increase the tag identification rates when a large number of tags are present in a small enclosure. The main cause for missed tags is the coupling between adjacent tags. Tag coupling yields what is sometimes called "masking", but the antenna community rather visualizes it like a pattern distortion and a voltage drop at the antenna input. Under these conditions, the voltage at the chip input remains below a minimum voltage threshold. As a consequence, the tag can not modulate the backscattered signal and can not be identified by the RFID reader. In addition, RFID communications normally take place in multipath environments and could suffer from large signal fadings which also reduce the identification rate.

It is well known that multi-element antennas (MEA) and diversity techniques overcome the multi-path fading and signal depolarization problems. But most of the time, RFID system integrators use cumbersome commercially antennas and distribute them over a large area around the region to scan. As a consequence, the RFID readers occupy a large volume and are not compact.

In addition, in some applications, the RFID tags affixed to objects are placed in a cabinet. When the cabinet is closed, the RFID reader (or interrogator) takes an inventory of the objects in the cabinet by reading the tags affixed on them. The cabinet comprises advantageously conductive walls like a faraday cage in order to get a uniform interrogator field without any communication voids. Stirring blades can be added in these cabinets in order to improve the reading performances. Such a mechanical stirring system is for example disclosed in the patent application US 2011/0163879. But it can somehow difficult to fit the mechanical stirring system in a cabinet when this latter has small dimensions.

US 2007/182566 A1 is acknowledged in the preamble of claim 1.

Otherwise, in large open spaces, it is very difficult to read a tag because of the so-called Fresnel zones creating voids or low magnetic field regions where tags can neither be powered nor be read. In that configuration, no metallic reflectors can be used to stir the interrogator field and reduce the regions with low-level electromagnetic field.

### Summary of the invention

A purpose of the invention is to alleviate at least a part of the shortcomings mentioned above.

According to the invention, it is proposed a RFID reader with a compact antenna system having spatial diversity, polarization diversity and radiation pattern diversity.

The invention is set out in claim 1.

The invention relates to a RFID reader for reading information from RFID tags, said RFID reader comprising an antenna system for emitting and receiving radiofrequency signals and a radiofrequency unit for generating the radiofrequency signals to be emitted and processing the received radiofrequency signals, wherein the antenna system comprises at least a first inverted F antenna and a second inverted F antenna each comprising a feed element, a radiating element having a first end coupled to the feed element and a second end free and a tuning element having a first end coupled to the ground plane and a second end coupled to the first end of the radiating element, the radiating elements of the first inverted F antenna extending in a first direction and a second direction respectively, said first and second directions being offset by a non-zero sequential rotation and said first and second inverted F antennas being isolated from each other by a quarter wavelength slot etched in the ground plane between said first and second inverted F antennas.

This antenna system has a diversity scheme and presents spatial diversity, radiation pattern diversity and polarization diversity. The quarter wavelength slot allows putting the first inverted F antenna close to the second inverted F antenna in order to have a compact antenna system.

In a first embodiment, the radiating elements of the first and second inverted F antennas are suspended above and substantially parallel to a ground plane.

In a variant, the elements of the first and second inverted F antennas are located in the same horizontal plane than the ground plane. In that variant, the inverted F antennas are located next to the ground plane and its tuning element is coupled to an edge of the ground plane.

In a preferred embodiment, the antenna system comprises four inverted F antennas, the direction of the radiating element of said four inverted F antennas being offset by a sequential rotation of 90 degrees. In this embodiment, the four inverted F antennas are isolated by four quarter wavelength slots in the ground plane also offset by a sequential rotation of 90 degrees.

Advantageously, the ground plane has a rectangular or square shape and is divided in four substantially identical areas by the four quarter wavelength lines, each one of the four inverted F antennas being located in one of the four areas.

According to an embodiment, each one of the four areas is located near a corner of the ground plane.

Advantageously, the antenna system further comprises a reflector plane located below the substrate, at a predetermined distance of the ground plane, to reduce back radiation.

According to an embodiment, the antenna system further comprises a single pole four throws (SP4T) switch for connecting sequentially each one of the four inverted F antennas to the radiofrequency unit.

In this case, this antenna system offers an alternative to a mechanical stirring system in order to achieve field stirring by feeding in turn each individual antenna port with RF power. The position and polarization diversity possess the advantage not to involve the use of any rotating parts.

In a variant, the antenna system further comprises a Maximum Ratio Combining (MRC) device to weight and combine optimally the signals received by the four inverted F antennas and delivering a combined signal of higher quality to the radiofrequency unit.

### Brief description of the drawings

The above-mentioned and other features and advantages of this invention, and the manner of attaining them, will become more apparent and the invention will be better understood by reference to the following description of embodiments of the invention taken in conjunction with the accompanying drawings, wherein:
- FIG.1 is a perspective view of an antenna system of a RFID reader in accordance with an exemplary embodiment of the present invention;
- FIG.2 is a partial cross-section view according to the line II-II of Fig.1 ;
- FIG.3 is a diagram illustrating the matching and isolation performance of the antenna system; and
- FIG.4 is a diagram illustrating the radiation patterns of each antenna of the antenna system of FIG.1 in the elevation planes xoz and yoz;
- FIG.5 is a diagram illustrating the angular distributions of the electric field for each antenna of the antenna system of FIG.1 in the yoz plane; and
- FIGs.6a to 6c are diagrams illustrating readability test results of the RFID reader respectively equipped with the antenna system of the invention, a circularly polarized (CP) antenna and a linearly polarized (LP) antenna.

### Detailed description of at least one embodiment of the invention

The exemplification set out herein illustrates a preferred embodiment of the invention, and such exemplification is not to be construed as limiting the scope of the invention in any manner.

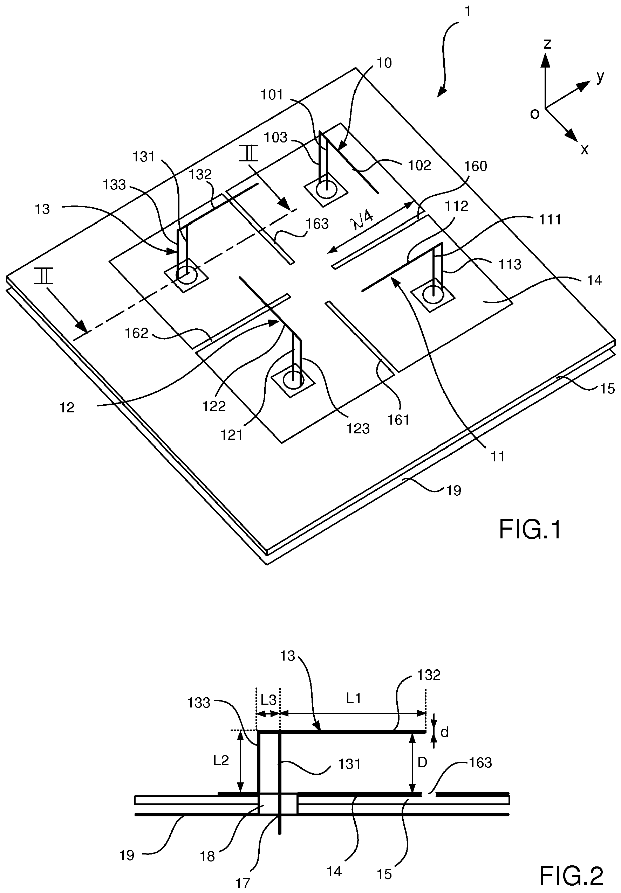

In the present specification, it is described an antenna system for RFID readers comprising 4 inverted F antennas (or IFAs) produced on a printed circuit board with a ground plane formed thereon, said IFAs being offset by a sequential rotation of 90°. This preferred embodiment is illustrated by Figs. 1 and 2. Fig.1 depicts the layout of this embodiment and Fig.2 is a partial cross-section view of the antenna system of Fig.1.

In reference to Figs.1 and 2, the antenna system 1 comprises 4 inverted F antennas (IFAs) 10, 11, 12 and 13 produced on a printed circuit board. Each IFA comprises a ground plane, a radiating element, a feed element and a shorting or tuning element. The ground plane, referenced 14, is formed on a substrate 15 of the printed circuit board. The ground plane and the substrate are for example made up of copper material and FR4 material respectively.

More specifically, the IFA 10 (respectively 11, 12 and 13) comprises a feed element 101 (resp. 111, 121 and 131), a radiating element 102 (respectively 112, 122 and 132) coupled to the feed element and suspended above and substantially parallel to the ground plane 14 and a tuning or shorting element 103 (respectively 113, 123 and 133) having a L-shape and coupled to the ground plane 14. These elements are made by metallic wires of circular section.

Feed element 101 (resp. 111, 121 and 131) supplies radio frequency (RF) signals to the radiating element 102 (resp. 112, 122 and 132) which is held substantially parallel to the ground plane 14 at a certain distance D. The operating frequency or the resonance frequency of the IFA may be controlled by controlling the size (width or length) of the shorting element of the IFA and/or the dimensional ratio of the radiating element.

According to an important feature of the invention, the directions of the radiating elements of the IFAs are offset by a sequential rotation. In the present example where the antenna system comprises 4 IFAs, the radiating elements are offset by a sequential rotation of 90 degrees. The IFA 10 is offset by an angle of 90° in a clockwise direction compared to the IFA 13. In the same manner, the IFA 11 (resp. 12, 13) is offset by an angle of 90° in a clockwise direction compared to the IFA10 (resp. 11, 12).

For each antenna, a hole is formed in the ground plane 14 and the substrate 15 at a certain location where the feed element of the IFA is to be connected to a coaxial feed line. The coaxial feed line, referenced 17 in Fig.2, provides radio frequency signals to the feed element of the IFA which in turns feeds RF signals to the radiating element. An IFA port 18 is mounted in this hole to connect the coaxial feed line to the feed element of the IFA.

Quarter wavelength slots 160, 161, 162 and 163 are etched in the ground plane 14 in order to isolate the IFA ports from each other. In Figs 1 and 2, the ground plane having a square shape, the slots are etched perpendicular to the edges of the ground plane at the half-length of each side. The slots modify the current flow on the ground plane and confine it around the slots boundaries.

Advantageously, a reflector plane 19 is located below the substrate 15, at a predetermined distance of the ground plane 14, to reduce back radiation. This reflector is for example made up of a copper material.

In addition, the antenna system further comprises a single pole four throws (SP4T) switch (not shown in the drawings) for connecting sequentially each one of the four IFAs to a port connected to a radiofrequency unit of the RFID reader. In a variant, the antenna system comprises a Maximum Ratio Combining (MRC) circuit for combining optimally the signals simultaneously received by the four inverted F antennas and delivering a combined signal having improved statistics to a port connected to radiofrequency unit of the RFID reader.

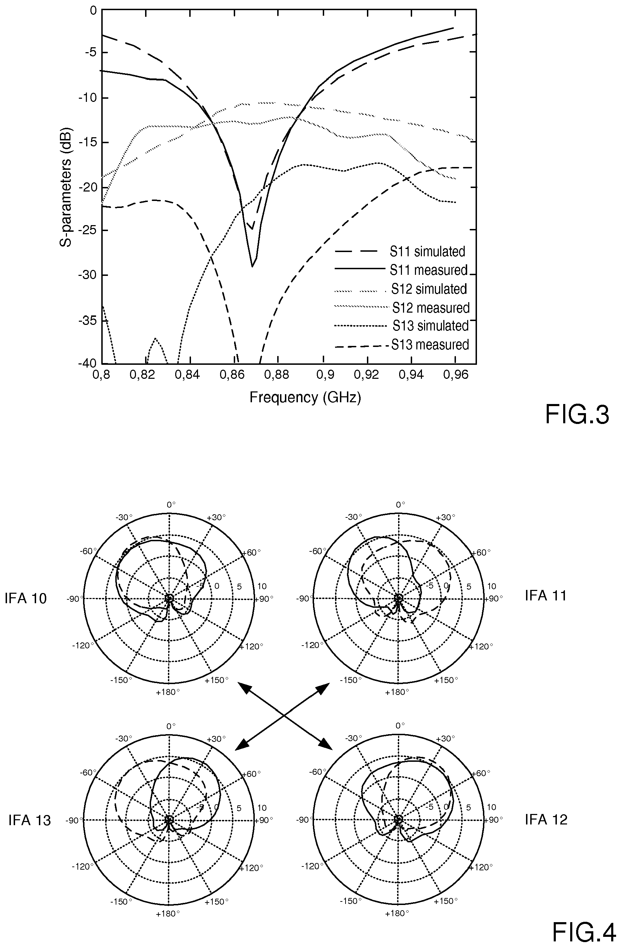

The figures 3 to 6c illustrate the performance of such an antenna system working in the European UHF RFID Band [865 MHz - 868 MHz]. For this system, the length and the width of the elements of IFAs shown in Fig.2 are the following ones:
- length L1 of the radiating element: 58,25 mm;
- length L2 of the feed element: 30 mm ;
- length L2 + L3 of the tuning element: 40 mm;
- diameter d of the elements: 1 mm;

The length of the quarter wavelength lines is about 86 mm. The reflector 19 is placed 2 cm below the ground plane.

Fig.3 shows the simulated and measured S-parameters of the antenna system. The system is simulated using the commercial electromagnetic solver High Frequency Structure Simulator (HFSS). The parameters Sᵢᵢ, with i ∈ [1..4], designate reflection coefficients and the parameters Sᵢⱼ, with i ≠ j et i ∈ [1..4], designate coupling coefficients between the different IFAs. The index i=1 or j=1 is allocated to the IFA 10. In the same manner, the index i=2 or j=3 is allocated to the IFA 11, the index i=3 or j=3 is allocated to the IFA 12 and the index i=4 or j=4 is allocated to the IFA 10. Consequently, S₁₁ designate the reflection coefficient of the IFA 10 and S₁₂ and S₁₃ designate the coupling coefficients between IFA 10 and IFAs 11, 12 respectively.

From Fig.3, it can be deduced that the reflection coefficients Sᵢᵢ are lower than -20 dB at the center frequency 868 MHz with a 5.2% bandwidth (Sᵢᵢ ≥ -8dB without slots). Low mutual coupling between orthogonal (S₁₂<-12dB) and collinear (S₁₃<-20 dB) IFAs are obtained in the entire band with the slotted ground plane.

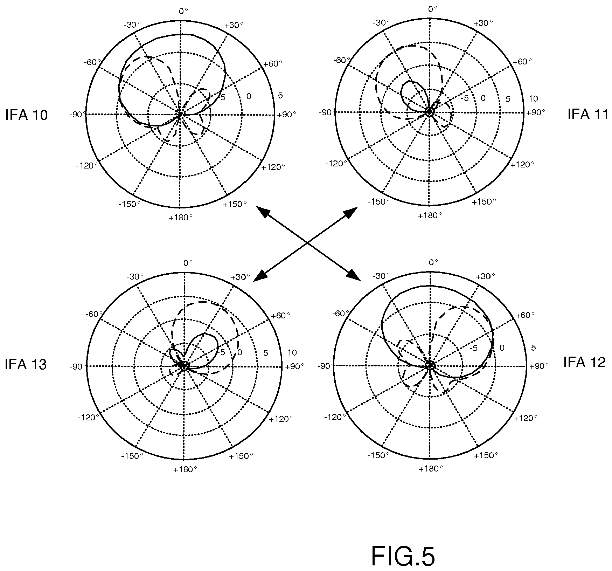

Fig.4 and Fig.5 illustrates the diversity performances of the antenna system according to the invention. More specifically, Fig.4 shows the simulated radiation patterns 10log(E_{θ}²+ E_{ϕ}²) in the elevation planes xoz (dotted line) and yoz (solid line). IFA 10 and IFA 12 focus their radiation patterns complementary in the ± 30° directions. The same complementary radiation patterns are observed for IFA 11 and IFA 13. Measured patterns of the antenna indicate a 5dBi IFA gain and a minimum front-to-back ratio of 10dBi. By adding the reflector backing, the gain is increased by 1dB for each IFA while the back radiation is reduced by more than 5dB.

Fig.5 illustrates the polarization diversity and shows the angular distributions of the electric fields E_{θ} (solid line) and E_{ϕ} (dotted line) for each IFA in the yoz plane. The field E_{θ} which is null for IFA 11 at +30° is compensated by a maximum E_{θ} for IFA 13 and vice-versa for -30° by symmetry of revolution. IFA 10 and IFA 12 exhibit important E_{ϕ} values with maxima directed toward -30° and +30° respectively while IFA 11 and IFA 13 are characterized by very weak IFA levels. On the other hand, the envelope correlation coefficient ρₑ has been calculated using the measured S-parameters. In the working band, we find ρₑ<0,003 both between collinear and orthogonal IFAs. All these results confirm the potentialities of the system in terms of pattern and polarization diversities.

A RFID tag reader equipped with the antenna system of the invention has been tested. Tags readability has been measured for 38 passive tags packed in a cardboard box, first with the antenna system of the invention and then with commercial circular and linear polarized antennas. The passive tags are built around meandered dipoles. Each tag is stuck on a small plastic box. Then, the 38 tags are randomly placed into a rectangular cardboard box. The test zone is a pie slice of 3 m radius and curvature sector varying from -40° to +40°. The reading rate is evaluated as a function of the distance between the cardboard box and the reader's antenna and its azimutal angle from the antenna center. The cardboard box is then moved in the test zone using 10 cm radial steps and 10° angular steps (270 measurement samples). The measurements were made in a lab room dominated by the presence of numerous metallic objects (cabinets, measurement equipments) and concrete walls. The cardboard box and the reader antennas are placed 1,1m above the ground floor. Each of the four IFA ports are connected through coaxial cables to one the four output channels of the RFID reader Impinj's Speedway R420. The reader then sequentially switches between the IFAs. In a commercial version, the antenna should be fed by a SP4T connected to one of the reader output. The reader delivers 29 dBm to each IFA which results into a EIRP (Equivalent Isotropic Radiated Power) of 29dBm+5dB=34dBm. The tags readability with the diversity antenna is compared with a 7 dBi circularly polarized (CP) antenna and a 5 dBi linearly polarized (LP) antenna. For a fair comparison, reader output powers are adjusted so that identical EIRPs are obtained for each antenna.

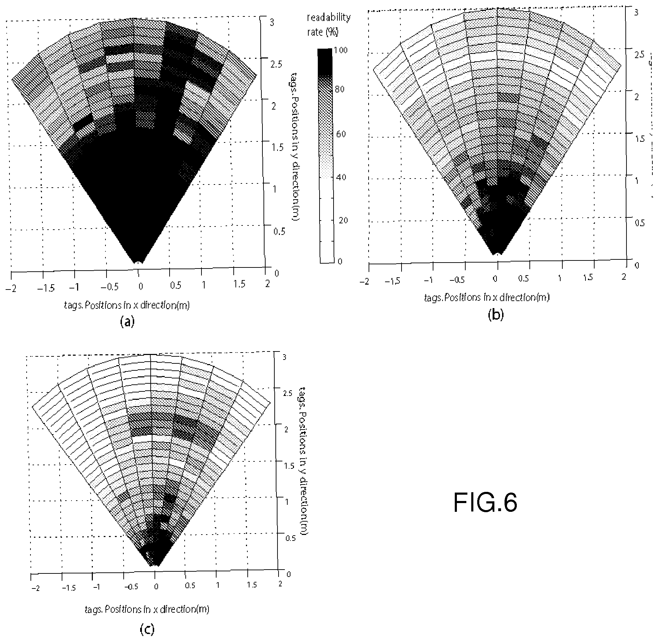

Fig. 6(a) to 6(c) show the rate of tags readability in the test zone for the three following antennas:
(a) the antenna system of the present invention,
(b) a circularly polarized (CP) antenna, and
(c) a linearly polarized (LP) antenna.

As shown in Fig. 6(a), 100% of the tags have been read by the inventive antenna system up to 1,5 meter. Beyond this distance, the rate of tags readability remains above 70% in the measurement area.

When the reader is connected to the CP antenna the 100% reading range is shorter, about 1m (Fig.6 (b)). This readability rate decreases when the cardboard box moves away from the reader.

With the CP antenna only 10% of the tags are read at 2m compared with more than 80% with the diversity antenna. Unlike the two other antennas, a fluctuation of tags reading with distance is observed for the LP antenna, as illustrated in figure 6(c). Two hot zones where 80% of the tags can be read are identified: the first is below 0,70m from the reader and the second at approximately 2 meters. The reading rate does not exceed 40% elsewhere. The second reading spot at 2 meters is attributed to multipath in-phase combination. These fluctuations are not observed with the diversity antenna where the tag readability rate decreases continuously along the distance. In any case, the reading rate is much larger for the diversity antenna than the 2 others.

As a conclusion, the antenna system described hereinabove is compact and enhances the readability for a strong density of passive UHF tags in indoor scenarios. By combining space, pattern and polarization diversities, this antenna system offers better reading rates than available commercial RFID reader antennas for equivalent volumes. Associated to an integrated SP4T, and added to classical RFID techniques for reading improvement such as the displacement of the tagged objects and/or the multiplexing of several reader antennas at distant points, this antenna system should make possible a convergence to a 100% reading rate much faster than the existing antenna solutions.

When RFID tags are placed in a closed cabinet with conductive, the present antenna system of the RFID reader offers an alternative to mechanical stirring systems in order to achieve field stirring by feeding in turn each individual antenna port with RF power.

Such a system antenna allows also minimizing the voids in large volume of interrogation space as it does not require any reflective parts or steering mechanism.

The present antenna system is also attractive because of its small dimensions: it fits into a volume of 250mm * 250mm * 40mm that makes 2500cm³. The same performances are achieved by 4 standard antennas, each having a volume of 80mm * 500mm * 20mm, that makes in total 3200 cm³.

While this invention has been described as having a preferred design, the present invention can be further modified within the scope of this disclosure. This application is therefore intended to cover any variations, uses, or adaptations of the invention using its general principles. The breadth and scope of the present invention should not be limited by any of the above-described exemplary embodiments, but should be defined only in accordance with the following claims and their equivalents.

For example, in a variant, the IFA can be realized by a multi-layer substrate whereon the ground plane is printed on a first layer and the radiating element is printed on a second layer above the first layer.

In another variant, the elements of the IFAs can be located in the same horizontal plane than the ground plane. In that case, the elements are printed on the substrate, next to the ground plane. If the ground plane is a metallic square printed on the substrate, an IFA is for example printed next to each one of the 4 edges of the ground plane and is connected to this edge. The feed element and the tuning element of the IFA are coupled to this edge of the ground plane and the radiating element extends advantageously in a direction parallel to this edge.

## Claims

1. RFID reader for reading information from RFID tags, said RFID reader comprising an antenna system for emitting and receiving radiofrequency signals and a radiofrequency unit for generating the radiofrequency signals to be emitted by the antenna system and processing the radiofrequency signals by the antenna system,
wherein the antenna system (1) comprises at least a first inverted F antenna (10) and a second inverted F antenna (11) each comprising a feed element (101,111),
a radiating element (102,112) having a first end coupled to the feed element and a second end free, and a tuning element (103,113) having a first end coupled to the ground plane and a second end coupled to the first end of the radiating element, **characterized by**
the radiating elements (102, 112) of the first and second inverted F antenna being held parallel to the ground plane at a certain distance and extending in a first direction and a second direction respectively, said first and second directions being offset by a 90 degrees sequential rotation and said first and second inverted F antennas being isolated from each other by a quarter wavelength slot (160) etched in the ground plane between said first and second inverted F antennas.

2. RFID reader according to claim 1, wherein the radiating element of the first and second inverted F antennas are suspended above and substantially parallel to a ground plane (14).

3. RFID reader according to claim 1, wherein the elements of the first and second inverted F antennas are located in the same horizontal plane than the ground plane.

4. RFID reader according to any one of claims 2 to 3, wherein the antenna system comprises four inverted F antennas (10,11,12,13), the
direction of the radiating element of said four inverted F antennas being offset by a sequential rotation of 90 degrees and wherein the four inverted F antennas are isolated by four quarter wavelength slots (160,161,162,163) in the ground plane also offset by a sequential rotation of 90 degrees.

5. RFID reader according to claim 4, wherein the ground plane (14) has a rectangular or square shape and is divided in four substantially identical areas by the four quarter wavelength lines, each one of the four inverted F antennas being located in one of the four areas.

6. RFID reader according to claim 4 or 5, wherein each one of the four areas is located near a corner of the ground plane.

7. RFID reader according to any one of claims 1 to 6, wherein the antenna system further comprises a reflector plane (19) located below the substrate, at a predetermined distance of the ground plane, to reduce back radiation.

8. RFID reader according to any of claims 1 to 6, wherein the antenna system further comprises a single pole four throws switch for connecting sequentially each one of the four inverted F antennas to the radiofrequency unit.

9. RFID reader according to any ones of claims 1 to 6, wherein it further comprises a combiner circuit for optimally weighting and adding the signals received by the four inverted F antennas and delivering a combined signal to the radiofrequency unit.

## Patentansprüche

1. RFID-Leser zum Lesen von Informationen von RFID-Etiketten, wobei der RFID-Leser ein Antennensystem zum Emittieren und Empfangen von Radiofrequenzsignalen und eine Radiofrequenzeinheit zum Erzeugen der Radiofrequenzsignale, die von dem Antennensystem emittiert werden sollen, und Verarbeiten der Radiofrequenzsignale durch das Antennensystem umfasst,
wobei das Antennensystem (1) mindestens eine erste invertierte F-Antenne (10) und eine zweite invertierte F-Antenne (11) umfasst, die jeweils ein Einspeiseelement (101, 111), ein Abstrahlelement (102, 112) mit einem ersten Ende, das an das Einspeiseelement gekoppelt ist, und einem freien zweiten Ende und ein Abstimmelement (103, 113) mit einem ersten Ende, das an die Massefläche gekoppelt ist, und einem zweiten Ende, das an das erste Ende des Abstrahlelements gekoppelt ist, umfasst, **dadurch gekennzeichnet, dass**
die Abstrahlelemente (102, 112) der ersten und der zweiten invertierten F-Antenne parallel zu der Massefläche in einem bestimmten Abstand gehalten werden und sich in einer ersten Richtung bzw. einer zweiten Richtung erstrecken, wobei die erste und die zweite Richtung um eine sequentielle 90-Grad-Drehung versetzt sind und die erste und die zweite invertierte F-Antenne durch einen Viertelwellenlängenschlitz (160) voneinander isoliert sind, der in die Massefläche zwischen der ersten und der zweiten invertierten F-Antenne geätzt ist.

2. RFID-Leser nach Anspruch 1, wobei das Abstrahlelement der ersten und der zweiten invertierten F-Antenne über und im Wesentlichen parallel zu einer Massefläche (14) aufgehängt ist.

3. RFID-Leser nach Anspruch 1, wobei die Elemente der ersten und der zweiten invertierten F-Antenne in derselben horizontalen Ebene wie die Massefläche angeordnet sind.

4. RFID-Leser nach einem der Ansprüche 2 bis 3, wobei das Antennensystem vier invertierte F-Antennen (10, 11, 12, 13) umfasst, wobei die Richtung des Abstrahlelements der vier invertierten F-Antennen um eine sequentielle 90-Grad-Drehung versetzt ist und wobei die vier invertierten F-Antennen durch vier Viertelwellenlängenschlitze (160, 161, 162, 163) in der Massefläche isoliert sind, die ebenfalls um eine sequentielle Drehung von 90 Grad versetzt ist.

5. RFID-Leser nach Anspruch 4, wobei die Massefläche (14) eine rechteckige oder quadratische Form aufweist und durch die vier Viertelwellenlängenlinien in vier im Wesentlichen identische Bereiche aufgeteilt ist, wobei jede der vier invertierten F-Antennen in einem der vier Bereiche angeordnet ist.

6. RFID-Leser nach Anspruch 4 oder 5, wobei jeder der vier Bereiche nahe einer Ecke der Massefläche angeordnet ist.

7. RFID-Leser nach einem der Ansprüche 1 bis 6, wobei das Antennensystem weiterhin eine Reflektorebene (19), die unter dem Substrat angeordnet ist, in einem vorherbestimmten Abstand von der Massefläche umfasst, um Rückstrahlung zu verringern.

8. RFID-Leser nach einem der Ansprüche 1 bis 6, wobei das Antennensystem weiterhin einen einpoligen Vierwegeschalter zum sequentiellen Verbinden von jeder der vier invertierten F-Antennen mit der Radiofrequenzeinheit umfasst.

9. RFID-Leser nach einem der Ansprüche 1 bis 6, wobei er weiterhin eine Kombinatorschaltung zum optimalen Gewichten und Addieren der Signale, die von den vier invertierten F-Antennen empfangen werden, und Liefern eines kombinierten Signals an die Radiofrequenzeinheit umfasst.

## Revendications

1. Lecteur RFID pour la lecture d'informations à partir d'étiquettes RFID, ledit lecteur RFID comprenant un système d'antennes pour émettre et recevoir des signaux radiofréquence et une unité radiofréquence pour générer les signaux radiofréquence devant être émis par le système d'antennes et traiter les signaux radiofréquence au moyen du système d'antennes,
dans lequel le système d'antennes (1) comprend au moins une première antenne en F inversé (10) et une seconde antenne en F inversé (11) comprenant chacune un élément d'alimentation (101, 111), un élément rayonnant (102, 112) ayant une première extrémité couplée à l'élément d'alimentation et une seconde extrémité libre, et un élément d'accord (103, 113) ayant une première extrémité couplée au plan de masse et une seconde extrémité couplée à la première extrémité de l'élément rayonnant, **caractérisé en ce que**
les éléments rayonnants (102, 112) des première et seconde antennes en F inversé sont maintenus parallèles au plan de masse à une certaine distance et s'étendent respectivement dans une première direction et une seconde direction, lesdites première et seconde directions étant décalées par une rotation séquentielle de 90 degrés et lesdites première et seconde antennes en F inversé étant isolées l'une de l'autre par une fente quart d'onde (160) gravée dans le plan de masse entre lesdites première et seconde antennes en F inversé.

2. Lecteur RFID selon la revendication 1, dans lequel les éléments rayonnants des première et seconde antennes en F inversé sont suspendus au-dessus d'un plan de masse (14) et sensiblement parallèles à celui-ci.

3. Lecteur RFID selon la revendication 1, dans lequel les éléments des première et seconde antennes en F inversé sont situés dans le même plan horizontal que le plan de masse.

4. Lecteur RFID selon l'une quelconque des revendications 2 à 3, dans lequel le système d'antennes comprend quatre antennes en F inversé (10, 11, 12, 13), la direction de l'élément rayonnant desdites quatre antennes en F inversé étant décalée par une rotation séquentielle de 90 degrés et dans lequel les quatre antennes en F inversé sont isolées par quatre fentes quart d'onde (160, 161, 162, 163) dans le plan de masse également décalées par une rotation séquentielle de 90 degrés.

5. Lecteur RFID selon la revendication 4, dans lequel le plan de masse (14) a une forme rectangulaire ou carrée et est divisé en quatre zones sensiblement identiques par les quatre lignes quart d'onde, chacune des quatre antennes en F inversé étant située dans une des quatre zones.

6. Lecteur RFID selon la revendication 4 ou 5, dans lequel chacune des quatre zones est située près d'un coin du plan de masse.

7. Lecteur RFID selon l'une quelconque des revendications 1 à 6, dans lequel le système d'antennes comprend en outre un plan réflecteur (19) situé en dessous du substrat, à une distance prédéterminée du plan de masse, pour réduire la rétrodiffusion.

8. Lecteur RFID selon l'une quelconque des revendications 1 à 6, dans lequel le système d'antennes comprend en outre un commutateur unipolaire à quatre directions pour connecter en séquence chacune des quatre antennes en F inversé à l'unité radiofréquence.

9. Lecteur RFID selon l'une quelconque des revendications 1 à 6, dans lequel il comprend en outre un circuit combinateur pour pondérer et ajouter de manière optimale les signaux reçus par les quatre antennes en F inversé et délivrer un signal combiné à l'unité radiofréquence.
